# EUROPEAN PATENT APPLICATION

(11) **EP 1 841 204 A1**
(43) Date of publication of application: **03.10.2007**
(21) Application number: 07290385.9
(22) Date of filing: 30.03.2007
(51) Int. Cl.: H04N 5/00

(54) **Method of controlling storage of a data broadcast application and corresponding broadcast receiver**

(30) Priority: 30.03.2006 KR 20060029216
(71) Applicant: LG Electronics Inc., Yongdungpo-Gu Seoul (KR)
(72) Inventor: Kwon, Jin Wook, 115-2301 Kwanakdreamtown Apt., Seoul 151-770 (KR); Park, Tae Jin, Seongnam-si Gyeonggi-do 461-824 (KR); Kim, Jin Pil, Seoul 135-942 (KR)
(74) Representative: Verdure, Stéphane

(57) **Abstract**

A method of controlling storage of a data broadcast application and broadcast receiver processing the same are disclosed. A method of controlling a data broadcast application includes receiving an application of data broadcasting, deciding whether a memory of a broadcast receiver is in a status capable of storing the received application using at least one of information for an overall size of the memory of the broadcast receiver and information for an empty size of the memory of the broadcast receiver, and if the memory of a broadcast receiver is in the status capable of storing the received application, storing the received application in the memory of the broadcast receiver.

## Description

This application claims the benefit of the Korean Patent Application No. 10-2006-0029216, filed on March 30, 2006, which is hereby incorporated by reference as if fully set forth herein.

### BACKGROUND

### Field

The present disclosure relates to a method of controlling storage of a data broadcast application and broadcast receiver processing the same.

### Discussion of the Related Art

Generally, a broadcasting station or the like transmits video and audio signals. Owing to the rapid developments of digital broadcasting, the broadcasting station or the like recently transmits various data broadcast signals independently or together with video and audio signals.

There are various kinds of data broadcasting such as OCAP (Open Cable Application Platform) data broadcasting, MHP (Multimedia Home Platform) data broadcasting, ACAP (Advanced Common Application Platform) data broadcasting, and the like for example.

In transmitting data broadcasting, a cable system operator (SO) or a multiple system operator (MSO) provides a broadcast receiver with a bound application, an unbound application, and the like.

However, in the related art, when a cable system operator (SO) or a multiple system operator (MSO) transmits an unbound application of a large size, even if a capacity of a memory of a broadcast receiver is unable to store the received application, the received unbound application may fail to be stored as well as a previously stored application (unbound application) is deleted.

### SUMMARY

According to one general implementation, a method of controlling a data broadcast application includes the steps of receiving an application of data broadcasting, deciding whether a memory of a broadcast receiver is in a status capable of storing the received application using at least one of information for an overall size of the memory of the broadcast receiver and information for an empty size of the memory of the broadcast receiver, and if the memory of a broadcast receiver is in the status capable of storing the received application, storing the received application in the memory of the broadcast receiver.

According to another general implementation, a broadcast receiver, which receives a data broadcast application, includes a broadcast signal receiving unit receiving an application of data broadcasting, a memory unit storing the received application of the data broadcasting, and a control unit deciding whether the memory unit is in a status capable of storing the received application using at least one of information for an overall size of the memory unit and information for an empty size of the memory unit, the memory unit controlling whether to store the received application of the data broadcasting in the memory unit according to a result of the decision.

The details of one or more implementations of [title] are set forth in the accompanying drawings and the description below. Other features will be apparent from the description and drawings, and from the claims.

### BRIEF DESCRIPTION OF THE DRAWINGS

The accompanying drawings, which are included to provide a further understanding of the implementations and are incorporated in and constitute a part of this disclosure, illustrate implementations and together with the description serve to explain the implementations. In the drawings:

FIG. 1 is a block diagram of a broadcast receiver capable of receiving a data broadcast application according to one general implementation;

FIG. 2 is a table of storage priority and size for random unbound applications;

FIG. 3 is a diagram to explain a reception of a segmented data broadcast signal;

FIG. 4 is a flowchart of a method of controlling a data broadcast application according to one general implementation; and

FIG. 5 is a flowchart of a method of controlling a data broadcast according to another general implementation.

### DETAILED DESCRIPTION

Reference will now be made in detail to the implementations, examples of which are illustrated in the accompanying drawings. Wherever possible, the same reference numbers will be used throughout the drawings to refer to the same or like parts.

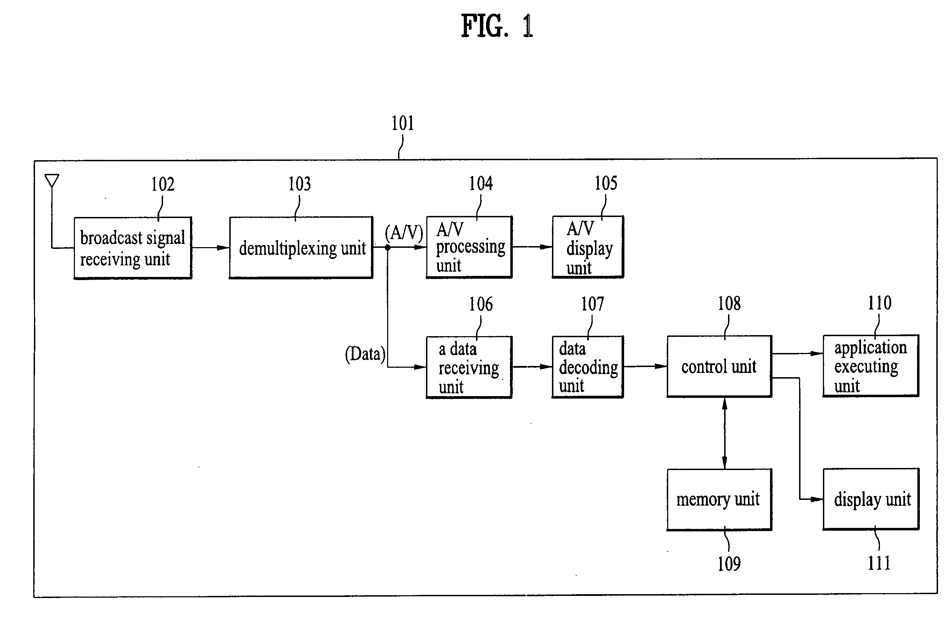

FIG. 1 is a block diagram of a broadcast receiver capable of receiving a data broadcast application according to one general implementation.

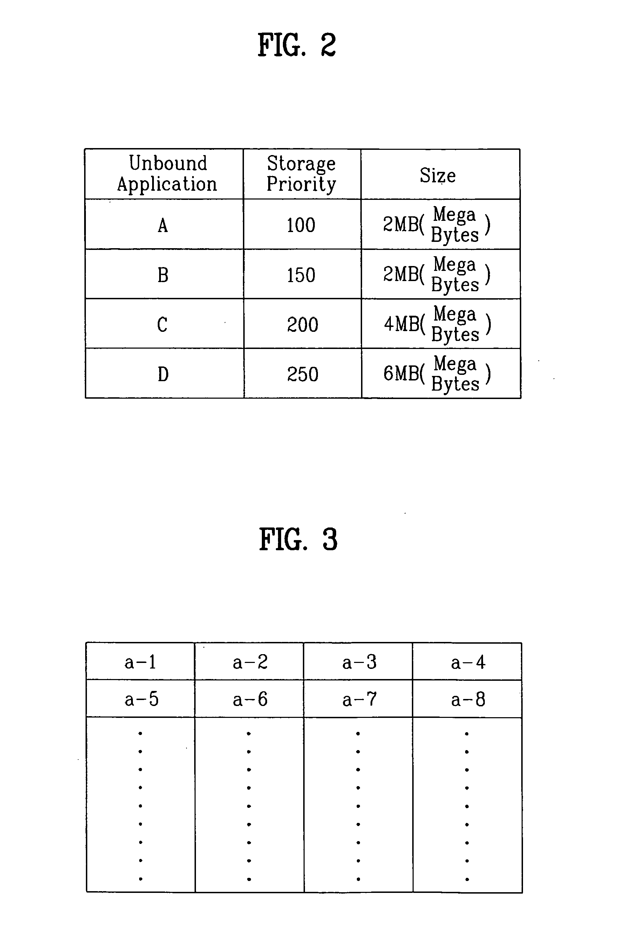

FIG. 2 is a table of storage priority and size for random unbound applications.

FIG. 3 is a diagram to explain a reception of a segmented data broadcast signal.

An exemplary process for a broadcast receiver to receive and store an unbound application of data broadcasting is explained with reference to FIGs. 1 to 3 as follows.

Referring to FIG. 1, a broadcast receiver 101 includes a broadcast signal receiving unit 102, a demultiplexing unit 103, an A/V processing unit 104, an A/V display unit 105, a data receiving unit 106, a data decoding unit 107, a control unit 108, a memory unit 109, an application executing unit 110, and a display unit 111.

The broadcast receiver 101 may correspond to a digital television (DTV) capable of data broadcasting reception for example.

The broadcast signal receiving unit 102 receives a broadcast signal transmitted by a broadcasting station. For instance, the broadcast signal receiving unit 102 is capable of receiving a cable broadcast signal transmitted by a cable system operator (SO), a multiple system operator (MSO), or the like.

The demultiplexing unit 103 separates the broadcast signal into an A/V broadcast signal and a data broadcast signal. The demultiplexing unit 103 then transfers the A/V broadcast signal to the A/V processing unit 104 and also transmits the data broadcast signal to the data receiving unit 106.

The A/V processing unit 104 carries out a process for decoding and the like to enable the received A/V signal to be outputted via the A/V display unit 105.

The A/V display unit 105 then outputs the decoded A/V broadcast signal or the like. In this case, the A/V display unit 105 can include a speaker, a screen of the broadcast receiver, and the like for example.

The data receiving unit 106 performs processing such as a header removal and the like on the data broadcast signal transferred from the demultiplexing unit 103 and then transfers the processed signal to the data decoding unit 107.

Yet, the data broadcast signal transferred to the data receiving unit 106 is formatted in a manner of being normally segmented into a plurality of data, which are shown in FIG. 3. This is because the broadcasting station or the like is unable to transport a whole file once.

The data decoding unit 107 decodes the data broadcast signal transferred form the data receiving unit 106 and plays a role in converting the format of a plurality of the segmented data to one whole file format.

The control unit 108 controls the memory unit 109, the application executing unit 110, the display unit 111, and the like. In particular, the control unit 108 controls the data broadcast signal transferred from the data decoding unit 107 to be stored in the memory unit 109.

The application executing unit 110 plays a role in executing various applications under the control of the control unit 108. For instance, the applications include data broadcasts associated with games, advertisements, ordering pictures, and the like.

The display unit 111 plays a role in displaying various kinds of information necessary for users under the control of the control unit 108.

The memory unit 109 stores various applications under the control of the control unit 108. The memory unit 109 includes a flash memory, a semi-perpetual memory, or the like instead of a temporary memory.

The functions or roles of the control unit 108 and the memory unit 109 are explained in detail as follows.

First of all, in transmitting data broadcasting, a cable system operator (SO) or a multiple system operator (MSO) provides a broadcast receiver with a bound application, an unbound application, and the like.

The unbound application means an application that is not usable by a user in case of tuning a currently viewed specific channel to another channel. Since the bound application is stored in a temporary storage unit instead of being permanently or semi-permanently stored in the broadcast receiver, it is deleted in case of tuning a specific channel into another channel.

On the other hand, the unbound application means an application usable by a user if a currently viewed specific channel is tuned to another channel or even if a power of the broadcast receiver is turned on/off. Since the unbound application is permanently or semi-permanently stored in the broadcast receiver. This disclosure is to control an unbound application stored in a broadcast receiver.

In case of receiving a specific data broadcast signal from the data decoding unit 107, the control unit 109 decides a size of the received specific data broadcast signal is equal to or smaller than an empty space of the memory unit 109.

Yet, the specific data broadcast signal can be an unbound application for example. For this, explained in the following description is the case that the specific data broadcast signal is an unbound application.

First of all, if a size of a received unbound application is equal to or smaller than the empty space of the memory unit 109 of the broadcast receiver 101, the control unit 108 controls the received unbound application to be stored in the memory unit 109.

On the other hand, if the size of the received unbound application is greater than the empty space of the memory unit 109 of the broadcast receiver 101, the control unit 108 decides whether the size of the received unbound application is equal to or smaller than an overall capacity of the memory unit 109 of the broadcast receiver 101.

If the size of the received unbound application is greater than the overall capacity of the memory unit 109 of the broadcast receiver 101, the control unit 108 controls the received unbound application to be compressed and stored in the memory unit 109. If the compression is impossible, the control unit 108 controls the display unit 111 to output information indicating that the received unbound application is not storable.

For instance, the information indicating that the received unbound application is not storable can be displayed via at least one of the speaker and the screen.

On the other hand, if the size of the received unbound application is equal to or smaller than the overall capacity of the memory unit 109 of the broadcast receiver 101, the control unit 108 decides whether there exists an application having a storage priority lower than that of the received unbound application among a plurality of unbound applications previously stored in the memory unit 109.

In this case, the storage priority is an index to decide which one of at least two unbound applications will be preferentially stored.

For reference, if the storage priority is high, it is designed that the unbound application having the high storage priority is preferentially stored. In this disclosure, it is assumed that the unbound application having the high storage priority is preferentially stored. Of course, this implementation is applicable to an opposite case as well.

If there exists an unbound application having a storage priority lower than that of the received unbound application among a plurality of the unbound applications previously stored in the memory unit 109, the control unit 108 controls the corresponding unbound application previously stored in the memory unit 109 to be deleted and then controls the received unbound application to be stored in the memory unit 109.

Yet, the control unit 108 does not always delete the corresponding unbound application previously stored in the memory unit 109. Preferably, the controls unit 108 controls the corresponding unbound application previously stored in the memory unit 109 to be deleted until an empty space for storing the received unbound application is secured.

Meanwhile, if there does not exist an unbound application having a storage priority lower than that of the received unbound application among a plurality of the unbound applications previously stored in the memory unit 109, the control unit 108 controls the received unbound application to be compressed and stored in the memory unit 109. If the compression is impossible, the control unit 108 controls the display unit 111 to output information indicating that the received unbound application is not storable. For instance, the information indicating that the received unbound application is not storable can be displayed via at least one of the speaker and the screen.

For the facilitation and convenience of the understanding, the received unbound application and the unbound application previously stored in the memory unit 109 are explained in detail with reference to FIG. 2 as follows.

First of all, it is assumed that there are four kinds of unbound applications as shown in FIG. 2. And, a storage priority and size of each of the applications is set up.

Of course, the information for the unbound applications shown in FIG. 2 is just exemplary, which is just assumed for convenience and facilitation of the explanation. For instance, it is assumed that an overall capacity of the memory unit 109 of the broadcast receiver 101 is 5MB (megabytes) and that unbound applications 'A' and 'B' shown in FIG. 2 are stored in the memory unit 109. If an unbound application 'C' is transferred to the control unit 108, the control unit 108 decides whether the unbound application 'C' can be stored in the empty space of the memory unit 109 of the broadcast receiver 101. Since the empty space of the memory unit 109 of the broadcast receiver is currently 1MB, the control unit 108 decides that whether a size of the unbound application 'C' is equal to or smaller than the overall capacity of the memory unit 109 of the broadcast receiver 101. In particular, a size of the unbound application 'C' is 4MB, the overall capacity of the memory unit 109 of the broadcast receiver 101 is 5MB, and a storage priority of each of the previously stored unbound applications 'A' and 'B' is lower than that of the unbound application `C'. So, the control unit 108 deletes the unbound applications 'A' and 'B'. And, the control unit 108 then controls the unbound application 'C' to be stored in the memory unit 109.

Meanwhile, if the unbound application 'C' is not received and if an unbound application 'D' is received, a size of the unbound application 'D' exceeds the overall capacity 5MB of the memory unit 109. So, the received unbound application 'D' is not stored and the previous unbound applications 'A' and 'B' are not deleted. In this case, the related art has the problem that the unbound application 'D' is not stored despite that both of the unbound applications 'A' and 'B' are deleted.

Therefore, this implementation is advantageous in preventing the previously stored unbound application(s) from being unconditionally deleted.

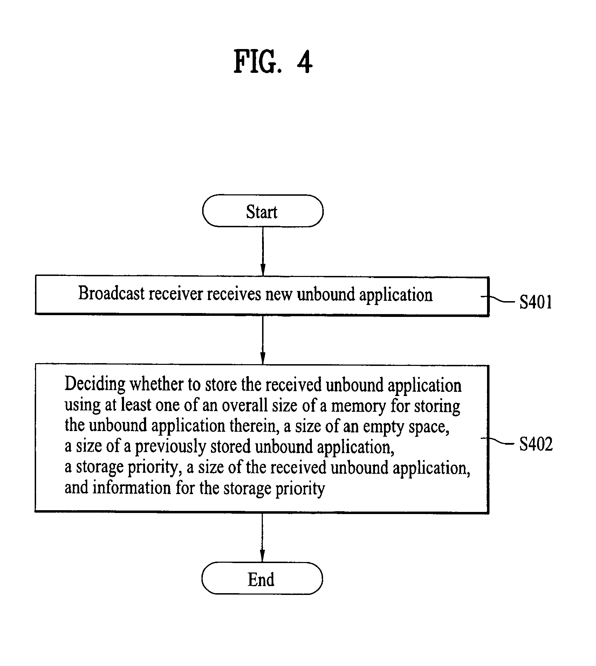

A method of controlling a data broadcast application according to one general implementation is explained with reference to FIG. 4 as follows.

FIG. 4 is a flowchart of a method of controlling a data broadcast application according to one general implementation.

Referring to FIG. 4, a broadcast receiver receives a new unbound application (S401). In this case, the broadcast receiver includes a digital television (DTV) capable o data broadcast reception.

The broadcast receiver having received the new unbound application devices whether to store the received unbound application using at least one of an overall size of a memory for storing the unbound application therein, a size of an empty space, a size of a previously stored unbound application, a storage priority, a size of the received unbound application, and information for the storage priority (S402).

Yet, the deciding step S402 can be included in a step of deciding whether the previously stored unbound application will be deleted.

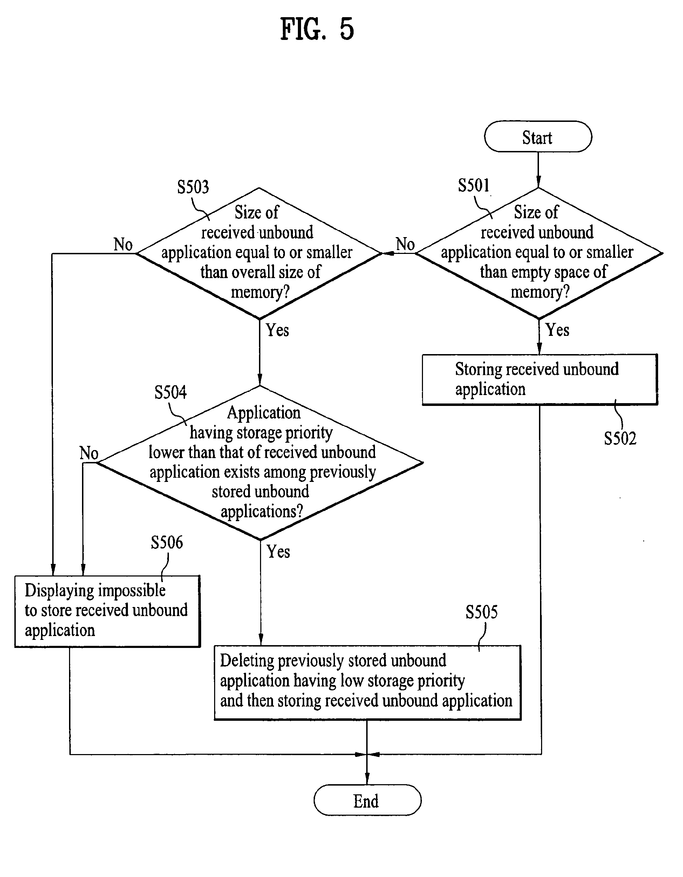

A method of controlling a data broadcast application according to one general implementation is explained with reference to FIG. 5 as follows. In particular, FIG. 5 shows details of the step S402 shown in FIG. 4.

FIG. 5 is a flowchart of a method of controlling a data broadcast application according to one general implementation.

Referring to Fig. 5, it is decided whether a size of an unbound application received by a broadcast receiver is equal to or smaller than an empty space of a memory (S501).

As a result of the deciding step S501, if the size of the unbound application received by the broadcast receiver is equal to or smaller than the empty space of the memory of the broadcast receiver, the received unbound application is stored in the memory of the broadcast receiver (S502).

As a result of the deciding step S501, if the size of the unbound application received by the broadcast receiver is greater than the empty space of the memory of the broadcast receiver, it is decided whether a size of the received unbound application is equal to or smaller than an overall capacity of the memory of the broadcast receiver (5503).

As a result of the deciding step S503, if the size of the received unbound application is greater than the overall capacity of the memory of the broadcast receiver, information indicating that it is impossible to store the received unbound application is outputted via a speaker or a screen (S506).

Optionally, prior to the step S506, it is decided whether the received unbound application can be compressed and stored. If it is impossible to store the compressed unbound application despite the compression, it is able to design the step S506 to be executed.

Meanwhile, as a result of the deciding step S503, if the size of the received unbound application is equal to or smaller than the overall capacity of the memory of the broadcast receiver, it is decided whether there exists an unbound application having a storage priority lower than that of the received unbound application among a plurality of previously stored unbound applications (S504).

As a result of the deciding step S504, if an unbound application having a storage priority lower than that of the received unbound application doest not exist among a plurality of previously stored unbound applications, information indicating that it is impossible to store the received unbound application is outputted via a speaker or a screen (5506).

Optionally, prior to the step S506, it is decided whether the received unbound application can be compressed and stored. If it is impossible to store the compressed unbound application despite the compression, it is able to design the step S506 to be executed.

Meanwhile, as a result of the deciding step S504, if there exists an unbound application having a storage priority lower than that of the received unbound application among a plurality of previously stored unbound applications, the unbound application having the storage priority lower than that of the received unbound application is deleted. The received unbound application is then stored (S505).

Preferably, the deleting process is carried out in a manner of deleting the unbound application(s) having the low storage priority one by one until a memory space available for storing the received unbound application is secured. Once the memory space iS secured, the deleting process is not further carried out.

Meanwhile, the terminologies used in the disclosure are defined to consider the functions in the invention. They can be modified according to intentions of those skilled in the art or customs. So, the definitions of the terminologies should be made based on the overall contents of the invention.

It will be apparent to those skilled in the art that various modifications and variations can be made in the implementations without departing from the spirit or scope of the above implementations. Thus, other implementations are within the scope of the following claims.

## Claims

1. A method of controlling a data broadcast application, comprising the steps of:
receiving an application of data broadcasting;
deciding whether a memory of a broadcast receiver is in a status capable of storing the received application using at least one of information for an overall size of the memory of the broadcast receiver and information for an empty size of the memory of the broadcast receiver; and
if the memory of a broadcast receiver is in the status capable of storing the received application, storing the received application in the memory of the broadcast receiver.

2. The method of claim 1, the step of deciding the status capable of storing the received application, comprising the steps of:
deciding whether a size of the received application is equal to or smaller than the empty size of the memory of the broadcast receiver; and
if the size of the received application is equal to or smaller than the empty size of the memory of the broadcast receiver, deciding that the memory of a broadcast receiver is in the status capable of storing the received application.

3. The method of claim 1, the step of deciding the status capable of storing the received application, comprising the steps of:
deciding whether a size of the received application is equal to or smaller than the empty size of the memory of the broadcast receiver; and
if the size of the received application is greater than the empty size of the memory of the broadcast receiver, deciding whether the size of the received application is equal to or smaller than the overall size of the memory of the broadcast receiver.

4. The method of claim 3, further comprising the step of if the size of the received application is greater than the empty size of the memory of the broadcast receiver and also equal to or smaller than the overall size of the memory, deciding whether there exists at least one application having a storage priority lower than that of the received application among a plurality of previously stored applications.

5. The method of claim 4, further comprising the steps of:
if there exists the at least one application having the storage priority lower than that of the received application among a plurality of the previously stored applications, deleting the at least one application having the storage priority lower than that of the received application; and
storing the received application in the memory of the broadcast receiver.

6. The method of claim 5, the step of deleting the at least one application having the storage priority lower than that of the received application, comprising the step of deleting the at least one application having the storage priority lower than that of the received application in order of a low storage priority.

7. The method of claim 4, further comprising the step of if the at least one application having the storage priority lower than that of the received application does not exist among a plurality of the previously applications, storing the received application in the memory of the broadcast receiver by compressing the received application.

8. The method of claim 4, further comprising the step of if the at least one application having the storage priority lower than that of the received application does not exist among a plurality of the previously applications, outputting information indicating that it is impossible to store the received application.

9. The method of claim 3, further comprising the step of if the size of the received application is greater than the empty size of the memory of the broadcast receiver and also greater than the overall size of the memory, storing the received application in the memory of the broadcast receiver by compressing the received application.

10. The method of claim 3, further comprising the step of if the size of the received application is greater than the empty size of the memory of the broadcast receiver and also greater than the overall size of the memory, outputting information indicating that it is impossible to store the received application.

11. The method of claim 1, wherein the data broadcasting comprises at least one selected from the group consisting of OCAP data broadcasting, MHP data broadcasting, and ACAP data broadcasting.

12. The method of claim 1, wherein the application is an unbound application stored in the broadcast receiver regardless of channel tuning or power-on/off of the broadcast receiver.

13. A broadcast receiver, which receives a data broadcast application, the broadcast receiver comprising:
a broadcast signal receiving unit receiving an application of data broadcasting;
a memory unit storing the received application of data broadcasting; and
a control unit deciding whether the memory unit is in a status capable of storing the received application using at least one of information for an overall size of the memory unit and information for an empty size of the memory unit, the memory unit controlling whether to store the received application of the data broadcasting in the memory unit according to a result of the decision.

14. The broadcast receiver of claim 13, wherein the control unit decides whether a size of the received application is equal to or smaller than the empty size of the memory unit and wherein if the size of the received application is equal to or smaller than the empty size of the memory unit, the control unit controls the received application to be stored in the memory unit.

15. The broadcast receiver of claim 13, wherein the control unit decides whether a size of the received application is equal to or smaller than the empty size of the memory unit and wherein if the size of the received application is greater than the empty size of the memory unit, the control unit decides whether to store the received application of the data broadcasting in the memory unit by deciding whether the size of the received application is equal to or smaller than the overall size of the memory unit.

16. The broadcast receiver of claim 15, wherein if the size of the received application is equal to or smaller than the overall size of the memory unit, the control unit decides there exists at least one application having a storage priority lower than that of the received application among a plurality of previously stored applications.

17. The broadcast receiver of claim 16, wherein if there exists the at least one application having the storage priority lower than that of the received application among a plurality of the previously stored applications, the control unit controls to delete the at least one application having the storage priority lower than that of the received application and store the received application in the memory unit.

18. The broadcast receiver of claim 17, wherein the control unit deletes the at least one application having the storage priority lower than that of the received application in order of a low storage priority

19. The broadcast receiver of claim 15, wherein if the size of the received application is greater than the overall size of the memory unit, the control unit controls the received application to be compressed and stored in the memory unit or controls to output information indicating it is impossible to store the received application in the memory unit.

20. The broadcast receiver of claim 16, wherein if the size of the received application is equal to or smaller than the overall size of the memory unit and if the application having the storage priority lower than that of the received application does not exist, the control unit controls the received application to be compressed and stored in the memory unit or controls to output information indicating it is impossible to store the received application in the memory unit.

21. The broadcast receiver of claim 13, wherein the application is stored in the broadcast receiver regardless of channel tuning or power-on/off of the broadcast receiver.
